(19) Europäisches Patentamt
European Patent Office
Office européen des brevets

(11) **EP 1 366 867 B1**

(12) **EUROPÄISCHE PATENTSCHRIFT**

(45) Veröffentlichungstag und Bekanntmachung des Hinweises auf die Patenterteilung:
**21.01.2009 Patentblatt 2009/04**

(51) Int Cl.:
***B25J 9/16*** (2006.01)

(21) Anmeldenummer: **03010669.4**

(22) Anmeldetag: **13.05.2003**

(54) **Verfahren und Vorrichtung zum Vermeiden von Kollisionen zwischen Industrierobotern und anderen Objekten**

Method and device for avoiding collisions between industrial robots and other objects

Méthode et dispositif pour éviter les collisions entre des robots industriels et d'autres objects

(84) Benannte Vertragsstaaten:
**AT BE BG CH CY CZ DE DK EE ES FI FR GB GR HU IE IT LI LU MC NL PT RO SE SI SK TR**

(30) Priorität: **30.05.2002 US 159701**

(43) Veröffentlichungstag der Anmeldung:
**03.12.2003 Patentblatt 2003/49**

(73) Patentinhaber: **KUKA Roboter GmbH**
**86165 Augsburg (DE)**

(72) Erfinder: **El-Houssaine, Waled**
**Lasalle,**
**Ontario N9H 2J6 (CA)**

(74) Vertreter: **Lempert, Jost et al**
**Patentanwälte,**
**Dipl.-Ing. Heiner Lichti,**
**Dipl.-Phys. Dr. rer. nat. Jost Lempert,**
**Dipl.-Ing. Hartmut Lasch,**
**Postfach 41 07 60**
**76207 Karlsruhe (DE)**

(56) Entgegenhaltungen:
**DE-A1- 19 857 436        US-A- 6 166 504**

- **PATENT ABSTRACTS OF JAPAN Bd. 1996, Nr. 04, 30. April 1996 (1996-04-30) -& JP 07 314378 A (TOYOTA AUTOM LOOM WORKS LTD), 5. Dezember 1995 (1995-12-05)**
- **MA H ET AL: "A SCHEME INTEGRATING NEURAL NETWORKS FOR REAL-TIME ROBOTIC COLLISION DETECTION" PROCEEDINGS OF THE INTERNATIONAL CONFERENCE ON ROBOTICS AND AUTOMATION. NAGOYA, JAPAN, MAY 21 - 27, 1995, NEW YORK, IEEE, US, Bd. VOL. 1, 21. Mai 1995 (1995-05-21), Seiten 881-886, XP000657280 ISBN: 0-7803-1966-4**
- **FREUND E ET AL: "EIN ALGORITHMS ZUR KOLLISIONSERKUNNUNG UND -VERMEIDUNG BEI ROBOTERNMIT ZYLINDERFORMIGEM ARBEITSRAUM" ROBOTERSYSTEME, SPRINGER VERLAG. BERLIN, DE, Bd. 6, Nr. 1, 1. März 1990 (1990-03-01), Seiten 1-10, XP000104118**
- **JIH-GAU JUANG: "Collision avoidance using potential fields" INDUSTRIAL ROBOT MCB UNIVERSITY PRESS UK, Bd. 25, Nr. 6, 1998, Seiten 408-415, XP002391001 ISSN: 0143-991X**

## Beschreibung

Die Erfindung betrifft ein Verfahren zum Vermeiden von Kollisionen zwischen einem Roboter und wenigstens einem anderen Objekt sowie eine Steuerungsvorrichtung, die zum Umsetzen des erfindungsgemäßen Kollisions-Vermeidungsverfahrens einsetzbar ist.

Nach einer allgemeinen Definition findet eine Kollision zwischen zwei Objekten A und B statt, wenn diese sich zur gleichen Zeit in demselben Raumbereich aufhalten. Diese Definition ist gleichbedeutend damit, dass wenigstens ein Punkt von A und ein Punkt von B durch dieselben Koordinaten bezüglich eines gemeinsamen Bezugssystems darstellbar sind.

Ein Roboter und weitere Objekte, zwischen denen Kollisionen vermieden werden sollen, werden für gewöhnlich als zusammenwirkende Vorrichtungen bezeichnet, da sie in einem bestimmten industriellen Verfahren zusammenarbeiten. Die Zusammenarbeit kann entweder eine aktive (im Falle der Zusammenarbeit eines Roboters mit einem anderen Roboter als Beispiel für eine zusammenwirkende Vorrichtung) oder eine passive sein. Bei modernen Industrierobotern, die sich mit erheblichen Geschwindigkeiten bewegen, führen Kollisionen in der Regel zu ernsthaften Schäden sowohl an den Robotern als auch an den von diesen gehandhabten Werkstücken und können zu kostspieligen Produktionsausfällen führen. Daher müssen derartige Kollisionen mit allen Mitteln verhindert werden, wenn Industrieroboter effizient eingesetzt werden sollen.

Verschiedene Arten von Kollisionen können innerhalb eines Arbeitsbereiches, d.h. eines Raumbereiches, den sich ein Roboter und andere (bewegliche) Objekte teilen, erfolgen. Zum Klassifizieren von Kollisionen müssen verschiedene Faktoren berücksichtigt werden, insbesondere (i) der Typ der zu berücksichtigenden Objekte, z.B. Roboter/Maschinen, stationäre Objekte usw.; (ii) der Kollisionsgrund, z.B. Bahnänderungen, Veränderung von Sensordaten, Programmierfehler usw.; (iii) die Produktionsphase, z.B. ob die Kollision während der Lernphase (manueller Betrieb), der Validierungsphase (automatischer Betrieb) oder während der normalen Produktion (automatischer Betrieb mit vorzugsweise hohen Geschwindigkeiten) erfolgt:

Ein passives stationäres Objekt ist ein Objekt, das sich an einem festen Ort innerhalb des Arbeitsbereiches befindet und eine unveränderliche Form aufweist. Beispiele für passive stationäre Objekte sind Tische, Stangen usw. Derartige Objekte sind offensichtlich nicht durch irgendeine Steuerungseinrichtung gesteuert. Allerdings kann für derartige Objekte ein statisches Geometriemodell erstellt und gespeichert werden, so dass eine Kollisionsüberprüfung stattfinden kann. Dabei ist zwischen dem Körper eines Roboters (bestehend aus sogenannten Verbindungen, s.u.) und der Last (Werkzeuge oder Werkstücke) zu unterscheiden. Zwischen dem Körper eines Roboters und einem Objekt kann ein ständiges Kollisionspotential bestehen. Das Kollisionspotential zwischen einem Werkzeug und dem Objekt besteht so lange, wie das Werkzeug nicht mit einem auf dem Objekt verankerten Bezugssystem - steuerungstechnisch - verbunden ist. Sobald eine solche steuerungsrelevante Verbindung geschaffen wurde und sich das Werkzeug in einem mit dem Objekt verknüpften Bezugssystem bewegt, besteht grundsätzlich kein Kollisionspotential zwischen dem Werkzeug und dem Objekt, ausgenommen bei manuellem Betrieb, beispielsweise Lernphasen, oder im Falle von Programmierfehlern.

Ein aktives stationäres Objekt ist ein Objekt, das sich an einem festen Ort innerhalb des Arbeitsbereiches befindet, darüber hinaus jedoch eine veränderliche Form aufweist. Beispiele für aktive stationäre Objekte sind Einbauten und Paletten, die je nach Beladung variable Höhen aufweisen. Für gewöhnlich werden derartige Objekte nicht durch Robotersteuerungen gesteuert, so dass letztere keinerlei Informationen bezüglich des Zustandes (offen/geschlossen, Höhe usw.) besitzen. Daher ist eine Kollisionsüberprüfung mit derartigen Objekten schwierig. Allerdings kann die Kollisionswahrscheinlichkeit beseitigt werden, indem das Objekt als ein passives stationäres Objekt behandelt wird, dessen Volumen dem größtmöglichen Volumen des aktiven stationären Objektes entspricht. Die vorstehend beschriebene Unterscheidung zwischen dem Körper des Roboters und einer Last ist auch hier zu berücksichtigen.

Ein bewegliches Objekt ist ein Objekt, dessen Stellung (Ort und Ausrichtung) innerhalb des Arbeitsbereiches nicht festliegt. Ein Beispiel für ein bewegliches Objekt ist eine Kiste auf einem Förderband. Ein Überprüfen und Vermeiden von Kollisionen mit einem solchen Objekt erfordert aktuelles Wissen bezüglich seiner Stellung.

Bahnänderungen können sowohl erwartet als auch unerwartet sein. Eine erwartete Bahnänderung ist eine Änderung, die dem betrachteten industriellen Prozess inhärent ist und innerhalb bekannter Grenzen erfolgt. Eine derartige Änderung kann auf der Grundlage sensorischer Daten erfolgen, die den Roboter veranlassen, sich bei jedem Prozesszyklus auf einer anderen Bahn zu bewegen. Eine unerwartete Bahnänderung ist eine große oder kleine Änderung, die erfolgt, obwohl die Bahn eigentlich unveränderlich ist, oder die einen bestimmten Veränderungsgrenzwert überschreitet. Veränderungen bei an sich konstanter Bahn können z.B. von Nullpunktverschiebungen herrühren. Dramatische Veränderungen jenseits der Grenzen von erwarteten Veränderungen können das Ergebnis eines Sensorausfalls oder unbehandelter Fehler, wie z.B. ein ungesichertes Teil auf einem Förderer sein, das außerhalb der gewöhnlichen Ablagefläche abgelegt ist.

Darüber hinaus kann eine Vielzahl von Programmierfehlern zu Kollisionen führen. Solche Kollisionen können während der Überprüfungsphase oder gewöhnlicher Produktionsphasen erfolgen.

Kollisionen können auch während des Erlernens oder Wiederanfahrens von Punkten eines Bewegungsablaufs erfolgen, wenn Benutzerfehler oder unerwartete Bewegungen auftreten. Nachdem die Punkte gelehrt oder wieder angefahren worden sind, können Kollisionen während der Validierung aufgrund unerwarteter Programmierfehler auftreten. Selbst für den Fall, dass die Lern-/Wiederanfahr-Phasen kollisionsfrei waren, können Kollisionen noch während der normalen Produktion als Folge von Bahnänderungen oder Programmierfehlern erfolgen, die während der früheren Phasen nicht offenbar geworden sind. Grund hierfür kann sein, dass mehrere ungewöhnliche Umstände zeitgleich auftreten.

Dokument JP07-314378 A offenbart die Berechnung von Bewegungsgeschwindigkeiten der X-, Y- und Z-Achsen ausschließlich senkrecht zueinander linear bewegbarer Arme von Robotern RA und RB durch ein Steuergerät. Dieses berechnet die Zeit; bis die Roboter bei der gegebenen Bewegungsgeschwindigkeit stoppen sowie den Bewegungsweg beim Stoppen. Anschließend, wird überprüft, ob Kollisionsvermeidungsbereiche der Roboter RA und RB an den Hältepositionen interferieren. Kern der Druckschrift ist, dass, wenn eine solche Überlappung gegeben ist, von den Robotern RA und RB derjenige mit der geringeren Priorität angehalten wird, um eine Kollision zu vermeiden.

US 6,212,444 offenbart ein Verfahren zur Vermeidung von Behinderungen bei einem Industrieroboter. In dieser Druckschrift werden Behinderungen zwischen einem robotischem Handhabungssystem und einer weiteren mit diesem zusammenarbeitenden Vorrichtung dadurch vermieden, dass gemeinsame Bereiche definiert werden. Eine Vorrichtung wird so lange daran gehindert, in den gemeinsamen Bereich einzudringen, bis die andere Vorrichtung diesen verlassen hat. Die Kollisionsvermeidung mit gemeinsamen Arbeitsbereichen scheitert jedoch, wenn die Steuerungssoftware nicht fehlerfrei geschrieben ist, was im Falle der vorstehend beschriebenen Programmierfehler zu potentiell ernsthaften Kollisionen führt.

Andere Ansätze finden bei der Offline-Programmierung Verwendung, bei der kollisionsfreie Bahnen für die Maschinen (Roboter und andere zusammenwirkende Vorrichtungen) innerhalb des gemeinsamen Arbeitsbereiches generiert werden. Allerdings erfordern derartige Verfahren eine genaue Vorkenntnis der Roboterbahnen. Darüber hinaus müssen die Bahnen aller Maschinen im Arbeitsbereich repetierend sein, d.h. die Bewegungsbahnen müssen sich unverändert wiederholen und dürfen nicht durch externe Sensoren oder Vorränge beeinflussbar sein.

Bekannte Robotersteuerungen detektieren in der Regel eine Kollision erst, nachdem eine solche stattgefunden hat. Dazu wird unter Verwendung eines dynamischen Maschinenmodells ein Motorstrom bestimmt. Wenn der tatsächlich gemessene Strom den Modellstrom um einen bestimmten Wert überschreitet, wird eine Kollision angenommen und das System gestoppt, um den Schaden zu minimieren.

Der Erfindung liegt die Aufgabe zugrunde, das Problem von Kollisionen zwischen Robotern mit ihresgleichen bzw. ihrer Umgebung unter Vermeidung der vorstehend genannten Nachteile des Standes der Technik zu lösen.

Dazu schafft die Erfindung ein Verfahren der eingangs genannten Art, das regelmäßig beinhaltet:

Bestimmen einer Anhaltzeit für eine automatisch oder manuell gesteuerte Roboterbewegung auf der Grundlage gegenwärtiger und früherer Gelenkstellungen und Gelenkgeschwindigkeiten für jedes Robotergelenk;

Vorhersagen einer Konfiguration einer Bewegungsbahn des Roboters bei der Anhaltzeit;

Überprüfen der vorhergesagten Konfiguration mittels Abstands-/Behinderungsalgorithmen bezüglich einer Behinderung von Teilen des Roboters durch Teile der anderen Objekte oder umgekehrt; und

Anhalten des Roboters und/oder der anderen Objekte im Falle einer drohenden Kollision.

Im Rahmen der Erfindung wird die vorhergesagte Konfiguration unter Verwendung der Anhaltzeiten bestimmt, wobei angenommen ist, dass der Roboter sich mit seiner aktuellen Beschleunigung ausgehend von seiner aktuellen Stellung und Geschwindigkeit weiterbewegt. Auf diese Weise liefern die vorhergesagten Bewegungsbahnen eine sogenannte Anhaltkonfiguration, die als solche bezeichnet wird, obwohl sie für gewöhnlich eine von Null verschiedene Geschwindigkeit aufweist.

Um Kollisionen zu verhindern, werden demnach Konfigurationen nicht nur zur gegenwärtigen Zeit bezüglich Kollisionen überprüft, sondern auch zu einer zukünftigen Zeit, die ausreichend ist, damit die Maschinen vor einer ungewollten Berührung sicher stoppen können.

Nach einer Weiterbildung des erfindungsgemäßen Verfahrens wird der Roboter entlang seiner Bewegungsbahn abgebremst und kommt damit auf dieser zum Stehen. Auf diese Weise kann der Betrieb direkt aus der Anhaltstellung wiederaufgenommen werden, ohne dass weitere Stellungskorrekturen vorzunehmen wären oder es zu einem Werkstückausschuss käme. Darüber hinaus stellt eine Anhalten der Maschinen auf ihren Bahnen sicher, dass keine Kollisionen während der Abbremsphase auftreten.

Nach einer weiteren Ausgestaltung der Erfindung wird der Roboter ohne Beachtung seiner eigentlichen Bewegungsbahn abgebremst und stoppt damit in der Regel abseits seiner Bahn. Das bedeutet, dass jede Roboterachse von ihrer gegenwärtigen Geschwindigkeit auf Null abgebremst wird, wobei ein einstellbarer Bremsverlauf vorgegeben sein kann. Dies kann mittels Kurzschluss-Bremsen geschehen, wobei die Antriebe durch mechanische Bremsen und durch Generatorbetrieb abgebremst werden. Ein derartiger Bremsvorgang ist ratsam, wenn ein Antrieb aus irgendeinem Grund nicht längs der Bahn gestoppt werden kann, beispielsweise wenn die Bahnsteigung zu steil ist.

Um Kollisionen vorherzusagen oder bezüglich ihres Auftretens zu überprüfen, ist es erforderlich, die Abstände zwischen den Teilen des Roboters und der anderen Objekte zu ermitteln. Dies beinhaltet die Bestimmung des Abstands zwischen geometrischen Approximationen der betroffenen Gegenstände, bei denen es sich entweder um einfache Formen wie Quader oder Kugeln oder um komplexe Polyeder, d.h. vielflächige geschlossene geometrische Gebilde handeln kann. Die am meisten verbreitete Methode zum Bestimmen von Abständen zwischen konvexen Polyedern ist die Methode nach Gilbert-Johnson-Keerthi (GJK), eine iterative Methode, die die Geometrie in Simplexen unterteilt, bis sie zu einem minimalen Abstand zwischen den beiden Objekten konvergiert. Dabei ist abzuwägen zwischen der Genauigkeit der Näherung und der Leistungsfähigkeit (Ausführungszeit) des Kollisions-Detektionsalgorithmus', der im Rahmen der Erfindung zum Einsatz kommt. So stellt beispielsweise die Beschreibung aller Verbindungen eines Roboters durch einhüllende Zylinder, Quader oder Kugeln eine eher konservative Approximation dar, ermöglicht jedoch eine schnelle Ausführbarkeit des Kollisions-Detektionsalgorithmus'. Andererseits bedingt eine genauere Approximation der Verbindungsstruktur durch Polyeder eine geringere Leistungsfähigkeit des Kollisions-Detektionsalgorithmus'. Daher beinhaltet die geometrische Behinderungsüberprüfung nach einer bevorzugten Ausgestaltung der Erfindung ein Bestimmen von Abständen zwischen geometrischen Approximationen, die verschiedene Genauigkeitsstufen aufweisen, die gemäß einer gewünschten Genauigkeit der Abstandsüberprüfung geprüft werden. Beispielsweise ist es nicht erforderlich, die genaueren Approximationen zu überprüfen, wenn die betreffenden Strukturen weit voneinander entfernt sind.

Das Erstellen von geometrischen Approximationen ist eine anspruchsvolle und zeitintensive Aufgabe. Allerdings gibt es bereits kommerziell verfügbare Software, die automatisch CAD-Modelle in Geometriedateien übersetzt, die sich mit Kollisions-Detektionsalgorithmen verwenden lassen.

Kollisionsvermeidung beinhaltet eine genaue Vorgabe der Bewegungsbahnen. Da die Bewegung von Industrierobotern hinreichend gleichmäßig und ruckfrei erfolgt, sind relativ einfache Konfigurations-Vorhersagealgorithmen zum Vorhersagen der Bewegungsbahnen ausreichend. Ausgehend von den tatsächlichen Stellungen und Geschwindigkeiten jedes einzelnen Gelenkes i zu gegenwärtigen und frühren Zeiten lässt sich die Bewegungsbahn des Gelenks - ausgedrückt als zukünftige Gelenkstellung $\theta_i$ - mittels der Beziehung:

$$\theta_i = 1/2\,\gamma_i t_{i,s}^2 + \dot{\theta}_{i,0} t_{i,s} + \theta_{i,0} \qquad (1)$$

vorhersagen, wobei $\theta_{i,0}$ und $\dot{\theta}_{i,0}$ die Gelenkstellung bzw. Gelenkgeschwindigkeit zur gegenwärtigen Zeit t, $\gamma_i$ die geschätzte Gelenkbeschleunigung zur Zeit t und $t_{i,s}$ die Anhaltzeit bezeichnet. Die Gelenkbeschleunigung $\gamma_i$ kann ausgehend von der Gelenkgeschwindigkeit zur Zeit t und zu früheren Zeiten
$t_{-k}$, $t_{-k} = t-k*\Delta t$ (k=1,2,3,...), abgeschätzt werden, wobei $\Delta t$ das Überprüfungs-Zeitintervall bezeichnet, dessen Dauer der Abtastperiode der Robotersteuerung entsprechen und demgemäß beispielsweise Werte um 12 ms annehmen kann. Die Gelenkstellung $\theta$ und die Gelenkgeschwindigkeit $\dot{\theta}$ sind gegeben als Winkelstellung (Einheit: Grad) bzw. Winkelgeschwindigkeit (Grad/s).

Nach einer bevorzugten Ausgestaltung der Erfindung wird die Geschwindigkeit $\dot{\theta}_i$ des Gelenks i ausgehend von der Gelenkstellung $\theta_{i,0}$ zur gegenwärtigen Zeit t und zu früheren Zeiten $t_{-k}$ unter Verwendung des Gear'schen Verfahrens, d.h. mittels der Beziehung:

$$\dot{\theta}_i = c_f \cdot \sum_{k=0}^{4} c_k \theta_{i,-k} \qquad (2)$$

abgeschätzt, wobei $\theta_{i,-k} = \theta_i(t_{-k})$ und
$c_f = 1/(12\Delta t)$, $c_0 = 25$, $c_1 = -48$, $c_2 = 36$, $c_3 = -16$, $c_4 = 3$.

Gleichfalls wird die Beschleunigung $\gamma_i$ des Gelenkes i ausgehend von der Gelenkgeschwindigkeit $\dot{\theta}_{i,0}$; zur gegenwärtigen Zeit t und zu früheren Zeiten $t_{-k}$, $t_{-k} = t-k*\Delta t$, unter Verwendung von

$$\gamma_i = c_f \cdot \sum_{k=0}^{4} c_k \cdot \dot{\theta}_{i,-k} \, . \qquad (3)$$

abgeschätzt. Eine Untersuchung der Vorhersagegenauigkeit hat ergeben, dass diese bis hin zu Vorhersagezeiten von 240 ms für typische Roboteranwendungen ausreichend ist.

Nach einer weiteren Ausgestaltung der Erfindung umfasst die Konfigurationsvorhersage und Behinderungsüberprüfung:

Bestimmen eines Anhaltabstands $\theta_{i,stop}$ des Gelenkes i gemäß $\theta_{i,stop} = \dot{\theta}_{i,0}^2 /(2\gamma_{i,max})$, wobei $\gamma_{i,max}$ eine maximale negative Beschleunigung des Gelenkes bezeichnet;
Addieren des Anhaltabstands zu der gegenwärtigen Stellung des Gelenkes, um so eine Konfiguration nach der Anhaltezeit zu erhalten; und Bestimmen eines Abstands zwischen Teilen des Roboters und der anderen Objekte bei dieser Konfiguration. Hierbei handelt es sich um einen eher konservativen Zugang: Beispielsweise betragen die maximale Geschwindigkeit und die maximale negative Beschleunigung des ersten Gelenkes eines Standard-Industrieroboters 240 Grad/s bzw. 880 Grad/s$^2$. Daher beträgt der Anhaltewinkel des Gelenkes bei maximaler Geschwindigkeit etwa 33 Grad. Aufgrund dieses großen Anhalteabstands könnte für die Anhaltekonfiguration eine Kollision vorausgesagt werden, obwohl die geplante Bewegungsbahn eigentlich kollisionsfrei ist.

Um die Genauigkeit der Stellungsvorhersage zu verbessern, ist nach einer Weiterentwicklung des erfindungsgemäßen Verfahrens vorgesehen, einen Filter auf die Gelenkstellungsund Geschwindigkeitsdaten anzuwenden, die zur Stellungsvorhersage benutzt werden. Vorzugsweise wird der Filter im Zeitbereich auf die Daten angewendet. Nach einer weiteren bevorzugten Ausgestaltung der Erfindung geschieht die Filterung durch Berechnen eines laufenden Mittels, welches die Daten effektiv glättet und auf diese Weise vor allem die hochfrequenten Anteile herausfiltert, die vor allem im Zuge abrupter Richtungswechsel der Roboterbewegung (Sprünge) auftreten. Die Filterlänge kann an die gewünschte Vorhersagegenauigkeit oder Irregularität des Bewegungsprofils angepasst werden. Alternativ dazu kann die Filterung auch im Frequenzbereich erfolgen.
Die Anhaltzeit einer Roboterachse hängt von den folgenden Parametern ab:

- Achsgeschwindigkeit: Je höher die Geschwindigkeit desto länger dauert es, den Roboter abzubremsen.
- Maximale erlaubte Geschwindigkeitsabnahme: Je größer die maximale erlaubte Geschwindigkeitsabnahme, desto weniger Zeit wird benötigt, um den Roboter abzubremsen;
- Roboterkonfiguration: Da die Trägheit des Roboters von seiner Konfiguration abhängt, hängt auch die Anhaltzeit einer gegebenen Achse von den Werten der verbleibenden Achsen ab, insbesondere von den Achsen am Ende der kinematischen Kette, d.h. in Richtung des distalen Endes des Roboters.
- Nutzlast: Je schwerer die Last und je größer ihre Trägheit, desto mehr Zeit wird benötigt, um den Roboter abzubremsen.

Die Anhaltzeit lässt sich anhand einer Nachschlagtabelle abschätzen. Allerdings schafft die Erfindung eine Vorrichtung zum Abschätzen der Anhaltzeiten der Achsen in einer Art und Weise, die trotz der großen Anzahl von Parametern auch für Echtzeit-Anwendungen geeignet ist:
Aus diesem Grund ist zwecks weiterer Verbesserung sowohl der Genauigkeit als auch der Geschwindigkeit der Ermittlung der Anhaltzeit nach einer Weiterentwicklung der Erfindung vorgesehen, dass zur Konfigurationsvorhersage und Behinderungsüberprüfung wenigstens ein neuronales Netz zum Abschätzen von Anhaltzeiten für die Roboterachsen eingesetzt wird. Nach einer bevorzugten Ausgestaltung wird für jedes Robotergelenk ein neuronales Netz verwendet. Dadurch wird die Abschätzung der Anhaltzeit flexibler und lässt sich besser an eine bestimmte Situation anpassen.
Zu diesem Zweck verwendet das erfindungsgemäße Verfahren mehrschichtige neuronale Netze (NN) mit möglicher Rückübertragung von Informationen innerhalb des Netzes. Die neuronalen Netze verarbeiten als Eingangswerte die Parameter, die die Anhaltzeit der Achsen beeinflussen, und liefern eine Abschätzung der Anhaltzeit. Die neuronalen Netze werden mit Datensätzen trainiert, die durch Messung am Roboter gewonnen wurden. Die Trainings-Datensätze sollten den gesamten Bereich der relevanten Parameter abdecken und dabei eine oder mehrere Einflussgrößen wie Gelenkgeschwindigkeiten, Gelenkwinkel, Gelenkstellungen, Stellungen und Geschwindigkeiten der Roboterbasis sowie Werkzeug- oder Lastmassen beinhalten. Sobald die neuronalen Netze trainiert sind, können sie zur genauen Abschätzung der Anhaltzeiten eingesetzt werden.
US 6,356,806 B1/DE 198 57 436 A1 offenbart die Verwendung einer Kombination eines Standard-PC-Betriebssystems und eines Echtzeit-Betriebssystems zur Robotersteuerung. Die Geometrie eines Roboters und eines Werkstücks werden mittels eines externen CAD- oder eines Offline-Simulationssystems näherungsweise dargestellt und die resultierenden Geometriedateien in Verbindung mit dem Standard-PC-Betriebssystem der Robotersteuerung gespeichert. Um die Geometriedatei, die in der Regel in Verbindung mit dem PC-Betriebssystem erzeugt und unterhalten wird, für Anwendungen nutzbar zu machen, die unter dem Echtzeit-Betriebssystem ablaufen, wenn das erfindungsgemäße Verfahren zur Kollisionsvermeidung zusammen mit einer derartigen dualen Steuerung Anwendung findet, werden vorzugsweise alle gewonnen Informationen bezüglich Kollisionen in einer Arbeitsbereich-Beschreibungsdatei gespeichert, um so zur Weiterleitung an das Echtzeit-Betriebssystem zur Verfügung zu stehen, das für die Steuerung der Roboterbewegung verantwortlich ist.

Nach einer Weiterentwicklung des erfindungsgemäßen Verfahrens enthält die Arbeitsbereich-Beschreibungsdatei Zeiger auf geometrische Approximationsdateien, die zum Beschreiben aller Objekte im Arbeitsbereich notwendig sind.

Nach einer alternativen Ausgestaltung des erfindungsgemäßen Verfahrens wird eine Kopie der Arbeitsbereich-Beschreibungsdatei in jeder Steuerung im Arbeitsbereich, d.h. in jeder zusammenwirkenden Vorrichtung unterhalten und aktualisiert. Darüber hinaus wird die Arbeitsbereich-Beschreibungsdatei zumindest dann aktualisiert, wenn eine geometrische Veränderung innerhalb des Arbeitsbereichs erfolgt, z.B. durch Befestigen eines neuen Werkzeugs am Roboter. Die Aktualisierung kann auch im Bereich des Echtzeit-Betriebssystems erfolgen.

Die meisten Roboteranwendungen erfordern ein gewisses Maß an zulässiger und gesteuerter Berührung, beispielsweise bei der Materialhandhabung, beim Schweißen usw. Daher muss die Robotersteuerung wissen, dass derartige Kontakte nicht wie potentiell gefährliche Kollisionen behandelt werden müssen, die zu einem Abbruch der Roboterbewegung führen. Aus diesem Grund wird im Vorfeld einer erlaubten Berührung zwischen dem Roboter und einem Objekt, z.B. während eines Handhabungsvorgangs, eine Verbindung geschaffen, die dafür sorgt, dass der Roboter und ggf. das Objekt während einer nachfolgenden "Kollision" nicht angehalten werden. Die Verbindung kann nach Beendigung der erlaubten Berührung wieder aufgelöst werden.

In diesem Zusammenhang muss unterschieden werden zwischen Situationen, in denen alle Maschinen in einem Arbeitsbereich sich längs bekannter, vorgegebener Bahnen bewegen, und Situationen, in denen die Bahnen in Echtzeit modifiziert werden, beispielsweise durch sensorische Informationen (Kameras oder dergleichen). Erstere werden im folgenden als "synchron" bezeichnet, während letztere "asynchron" genannt werden. Derartige Situationen ergeben sich auch im Verhältnis zwischen einem Roboter und einem Werkzeug, welches dieser benutzt. Ein Bestandteil des Arbeitsbereichs ist mit einem anderen Bestandteil verbunden, wenn sich ersterer in einem Bezugssystem bewegt, welches an letzterem angeheftet ist. Damit ist die Relativbewegung zwischen den beiden Bestandteilen synchron und es existiert keine potentielle Kollision zwischen ihnen, solange die Verbindung besteht. Beispielsweise führt eine Bewegung einer der beiden Bestandteile, wie eines ersten Roboters, zu einer entsprechenden Bewegung des anderen Bestandteils, wie eines zweiten Roboters. Auf diese Weise ist das (räumliche) Verhältnis der beiden konstant. Ein Kollisionspotential kann vor Schaffung der Verbindung bestehen, oder nachdem die Verbindung gelöst worden ist. Demnach ist ein Werkzeug, das mit einem Werkstück in Berührung kommt, mit dem Werkstück verbunden. Es bewegt sich daher in einem Bezugssystem, das an das Werkstück angeheftet ist. Der Vorgang ist demzufolge synchron, und es existiert kein Kollisionspotential zwischen dem Werkzeug und dem Werkstück. Allerdings handelt es sich bei bis zu 90% der im alltäglichen Einsatz von Industrierobotern auftretenden Fälle um asynchrone Fälle.

Um das vorstehend beschriebene Verfahren bei einem Roboter zur Kollisionsvermeidung zwischen dem Roboter und wenigstens einem anderen Objekt einsetzen zu können, schlägt die Erfindung weiterhin eine Steuerungsvorrichtung vor, die aufweist: Mittel zum regelmäßigen Bestimmen einer Anhaltezeit für eine automatisch oder manuell gesteuerte Roboterbewegung auf der Grundlage gegenwärtiger und früher Gelenkstellungen und Gelenkgeschwindigkeiten für jedes Robotergelenk; Mittel zum regelmäßigen Vorhersagen einer Konfiguration einer Bewegungsbahn des Roboters nach den Anhaltezeiten; Mittel zum regelmäßigen Überprüfen der vorhergesagten Konfiguration mittels Abstands-/Behinderungs-Algorithmen bezüglich einer Behinderung von Teilen des Roboters durch Bestandteile der anderen Objekte, und Mittel zum Anhalten des Roboters und/oder der anderen Objekte im Falle einer drohenden Kollision.

Die erfindungsgemäße Steuerungsvorrichtung ist im folgenden als CAM (Collision Avoidance Manager) bezeichnet. Die CAM ist eine Steuerung, die für die Detektion von bzw. die Reaktion auf Kollisionen zwischen wenigstens zwei Bestandteilen des Arbeitsbereiches zuständig ist. In einem Arbeitsbereich kann mehr als eine CAM vorgesehen bzw. vorhanden sein.

Nach einer weiteren Ausgestaltung der erfindungsgemäßen Steuerungsvorrichtung besitzt diese Prozessormittel zum parallelen Ausführen von zwei Betriebssystemen, von denen eines ein Standard-PC-Betriebssystem und das andere ein Echtzeit-Betriebssystem zum Steuern der Roboterbewegung ist. Die Prozessormittel sind zum Ausführen eines Übersetzer-Programms für die Kommunikation zwischen dem PC- und dem Echtzeit-Betriebssystem ausgebildet. Auf diese Weise existiert für den Benutzer unter dem PC-Betriebssystem (z.B. Windows™) eine standardisierte Benutzeroberfläche, wodurch die Programmierung des Roboters sehr vereinfacht wird. Nach einer bevorzugten Ausgestaltung sind die Prozessormittel zum Ausführen von entsprechenden Teilen eines Programms ausgebildet, durch das ein Verfahren zur Kollisionsvermeidung implementiert ist. Nach einer weiteren Ausgestaltung der erfindungsgemäßen Steuerungsvorrichtung weist diese Speichereinheiten in Verbindung mit beiden Betriebssystemen zum Speichern von Geometriedaten für den Arbeitsbereich auf.

Wie bereits früher erwähnt, werden alle Informationen bezüglich Kollisionen (z.B. potentielle Kollisionen, Zeiger auf Geometriedateien usw.) in Speichereinheiten der CAM in speziellen Arbeitsbereich-Beschreibungsdateien gespeichert, die Arbeitsbereich-Diagramme (WorkCell Diagrams WCD) genannt werden. Für jeden Bestandteil des Arbeitsbereichs werden so Informationen bezüglich seiner potentiellen Kollisionen und Geometriedateien in den Speichereinheiten abgelegt. Diese Informationen werden in die Echtzeit-Steuerung geladen, so dass die vorstehend beschriebenen Kollisions-Vermeidungsaufgaben (Collision Avoidance Tasks CAT), beispielsweise die tatsächliche Vorhersage der Roboterbewegung und des Abbremsen auf oder abseits der Bahn gemäß des erfindungsgemäßen Verfahrens, diese in Echtzeit nutzen können.

Um Kollisions-Informationen zwischen den beiden Betriebssystemen zu kommunizieren, beinhaltet die erfindungsgemäße Steuerungsvorrichtung ein Übersetzungsprogramm (Interpreter), das vorzugsweise unter dem Echtzeit-Betriebssystem läuft.

Da ein Arbeitsbereich mehrere CAM in Verbindung mit einer Mehrzahl von kollisionsüberwachten Robotern oder dergleichen beinhalten kann, umfasst die erfindungsgemäße Steuerungsvorrichtung Prozessormittel zumindest in Verbindung mit dem Echtzeit-Betriebssystem, die für die Kommunikation mit den Echtzeit-Betriebssystemen entsprechender anderer Steuerungsvorrichtungen in einem gemeinsamen Arbeitsbereich ausgebildet sind. Die dadurch definierte Steuerungs-Kommunikationsaufgabe erhält Daten von den entsprechenden Robotersteuerungen (diejenigen Steuerungen, für die eine bestimmte CAM Kollisionen detektiert).

Kommunikation zwischen Steuerungen ist eine Voraussetzung für viele Aspekte des Zusammenwirkens von Robotern. Damit die erfindungsgemäße Kollisionsvermeidung funktioniert, müssen verschiedene Daten an die CAM übermittelt werden. Die CAM muss die Konfiguration aller Bestandteile des Arbeitsbereichs kennen. Daher sind für jeden Roboter oder jedes Objekt, das die CAM überwacht, die folgenden Wert zu übermitteln:

- Gelenkwerte: Diese definieren die Konfiguration des Roboters bezüglich seiner Basis;

- Basiskoordinaten: Diese definieren die Verbindung mit den Gelenkwerten die Konfiguration des Roboters im Arbeitsbereich. Die Basis kann selbst beweglich sein, beispielsweise wenn der Roboter auf einer Schiene angeordnet ist;

- Gelenkgeschwindigkeiten und Basisgeschwindigkeiten: Diese werden in den Kollisions-Vorhersagealgorythmen verwendet. Dabei ist die Geschwindigkeit des Basis-Bezugssystems für die Steuerung nicht ohne weiteres verfügbar und muss unter Verwendung von Daten gemessen oder geschätzt werden, die eine externe Maschine, die die Roboterbasis bewegt, zur Verfügung stellt;

- Werkstückänderungen;

- Werkzeugänderungen;

- Änderungen des Bewegungsziels; und

- Änderungen des Kollisionspotentials.

Werkzeug- und Werkstückänderungen am Roboter, der durch die CAM gesteuert wird, werden durch den Interpreter an die Echtzeit-Steuerung übermittelt.

Nach einer Weiterbildung der Erfindung weist die Steuerungsvorrichtung zusätzlich eine Eingabeeinrichtung zum Eingeben von Geometriedaten für den Arbeitsbereich auf. Auf diese Weise kann eine externe CAD-Geometriedatei der CAM einfach zur Verfügung gestellt werden. Die Eingabeeinrichtung kann beispielsweise als Diskettenlaufwerk oder Netz-Verbindungseinrichtung ausgebildet sein.

Aus der vorstehenden Beschreibung ist ersichtlich, dass die vorliegende Erfindung sich durch eine Vielzahl an Vorteilen gegenüber dem Stand der Technik auszeichnet:

Der Benutzer muss beim Programmieren eines Roboters keinerlei Vorkehrungen zur Kollisionsvermeidung treffen, wie ein Definieren gemeinsamer Arbeitsbereiche. Darüber hinaus kann das erfindungsgemäße Verfahren als Absicherung zusammen mit vorbekannten expliziten Verfahren eingesetzt werden.

Weiterhin ermöglicht das erfindungsgemäße Verfahren ein automatisches Einrichten des Arbeitsbereiches vom Standpunkt der Kollisionsvermeidung. Es ermittelt automatisch, welche Teile ein Kollisionsrisiko bezüglich welcher anderen Teile aufweisen.

Da das erfindungsgemäße Verfahren darauf aufbaut, die Konfigurationen der bewegten Teile über einen Zeitraum vorauszusagen, der lang genug ist, um die Maschinen sicher abzubremsen, und anschließend diese Konfigurationen bezüglich möglicher Behinderungen überprüft, müssen die Bewegungsbahnen zuvor nicht bekannt sein. Wird eine Kollision vorausgesagt, so werden die Maschinen entlang oder abseits ihrer Bahn gestoppt.

Da vor allem die Lern- und Validierungsphasen sich durch langsame Geschwindigkeiten auszeichnen, sind in diesen Phasen auch die Anhaltezeiten und -abstände sehr gering. Aus diesem Grund ist das erfindungsgemäße Verfahren in diesen Fällen besonders gut geeignet.

Kollisionen, die durch Programmierfehler oder unerwartete große Bahnänderungen hervorgerufen werden, führen zu einer Berührung von Objekten, die unter normalen Umständen jederzeit weit voneinander entfernt sein sollten. In diesen Fällen ist das Vorhersagen einer Anhaltekonfiguration unter Umständen zu aufwändig und nicht erforderlich. Es reicht in diesen Fällen aus, den Abstand zwischen den entsprechenden Objekten zu überwachen und diese abzustoppen, falls sie sich einander bis auf einem bestimmten vorgegebenen Abstand annähern. Dieses vereinfachte Verfahren lässt sich in jeder Arbeitsphase und für jede Bewegungsgeschwindigkeit anwenden, wenn die Abstandsschwelle groß genug gewählt werden kann. Ist dies nicht der Fall, so ist das vorstehend beschriebene genauere Verfahren anzuwenden.

Bevorzugte Ausgestaltungen der Erfindung sind im folgenden mit Blick auf die Zeichnungen beschrieben. Es zeigt:

Fig. 1    ein Ablaufdiagramm des erfindungsgemäßen Verfahrens zur Kollisionsvermeidung;

Fig. 2    ein Blockschaltbild einer Robotersteuerung für den Einsatz des erfindungsgemäßen Verfahrens;

Fig. 3    schematische Darstellungen mit verschiedenen geometrischen Approximationen eines Roboters und seiner Teile bzw. Verbindungen;

Fig. 4    eine schematische Darstellung einer Roboterbewegung in der Nähe eines Hindernisses;

Fig. 5    Ergebnisse einer numerischen Simulation einer Kollisionsbewegung zweier Roboter; und

Fig. 6    eine schematische Darstellung eines dreischichtigen neuronalen Netzes, das zur Vorhersage der Anhaltzeit in Verbindung mit dem erfindungsgemäßen Verfahren zur Kollisionsvermeidung eingesetzt wird.

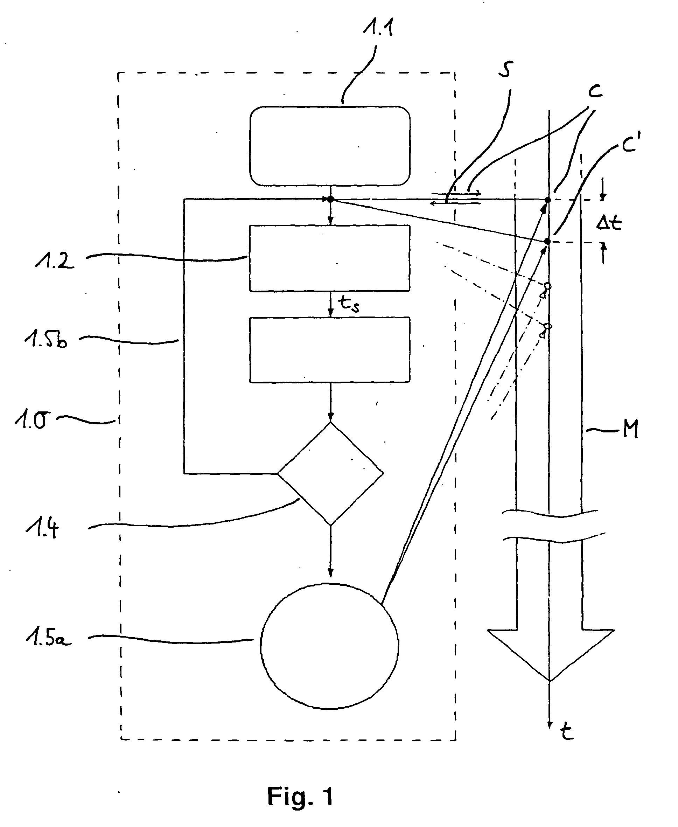

Fig. 1 zeigt eine Roboterbewegung M, die von einer bekannten Robotersteuerung (nicht gezeigt) gesteuert und zur Kollisionsvermeidung durch das erfindungsgemäße Verfahren 1.0 überwacht wird. Im Zuge einer Initialisierungsphase 1.1 werden potentielle Kollisionen zwischen Robotern, Werkzeugen und stationären Objekten, d.h. Objekten, die an einem festen Ort innerhalb des Arbeitsbereichs angeordnet sind, ermittelt. Die Einhüllenden, d.h. die einhüllenden Fläche des Raumbereichs, den die Roboter im Arbeitsbetrieb erreichen können, werden benutzt, um zu ermitteln, ob Kollisionen mit anderen Robotern und/oder stationären Objekten möglich sind. Anschließend erfolgt eine Kollisionsüberwachung C durch das erfindungsgemäße Verfahren 1.0 regelmäßig zu Zeiten t, die voneinander durch Zeitintervalle $\Delta t$ im Verlauf der Roboterbewegung M beabstandet sind.

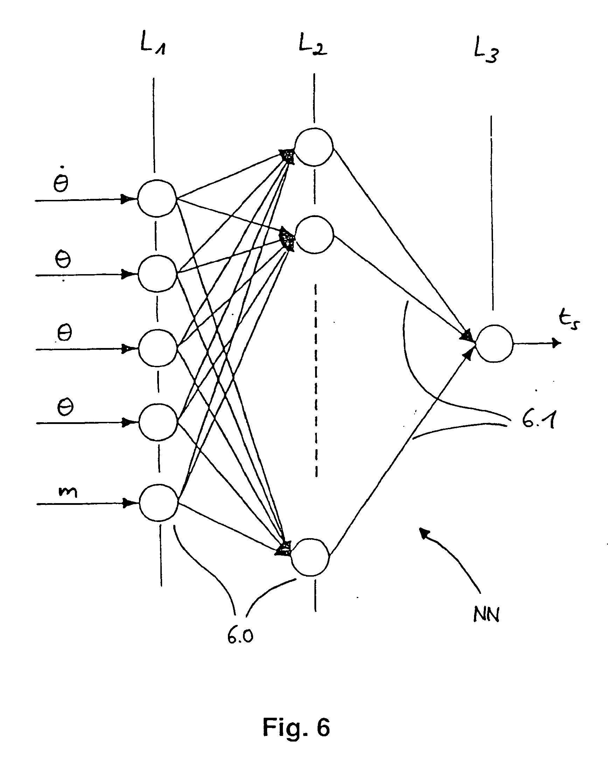

Sensordaten S vom Roboter und/oder aus dem Arbeitsbereich, z.B. Gelenkwinkel und Gelenkgeschwindigkeiten des Roboters, Kamerabilder usw. werden dem Verfahren zur Kollisionsvermeidung 1.0 zur Verfügung gestellt und zusammen mit anderen Parametern, wie der Nutzlast oder der Roboterkonfiguration, zum Abschätzen 1.2 der Anhaltzeit $t_s$ benutzt, z.B. mittels neuronaler Netze, wie in Verbindung mit Fig. 6 gezeigt.

Mittels der abgeschätzten Zeit $t_s$ sagt ein Algorithmus eine Roboterbahn während der Anhaltzeit voraus 1.3, die anschließend bei 1.4 zur Behinderungsüberprüfung benutzt wird, die ein Überprüfen des Abstandes zwischen Bestandteilen des Arbeitsbereichs umfasst. Wenn eine zukünftige Kollision detektiert wird, stoppt der Roboter 1.5a. Dies kann entweder längs der Roboterbahn oder abseits geschehen, beispielsweise durch einfaches mechanisches Bremsen. Wird keine Kollision detektiert 1.5b, so beginnt ein neuer Steuerzyklus C'.

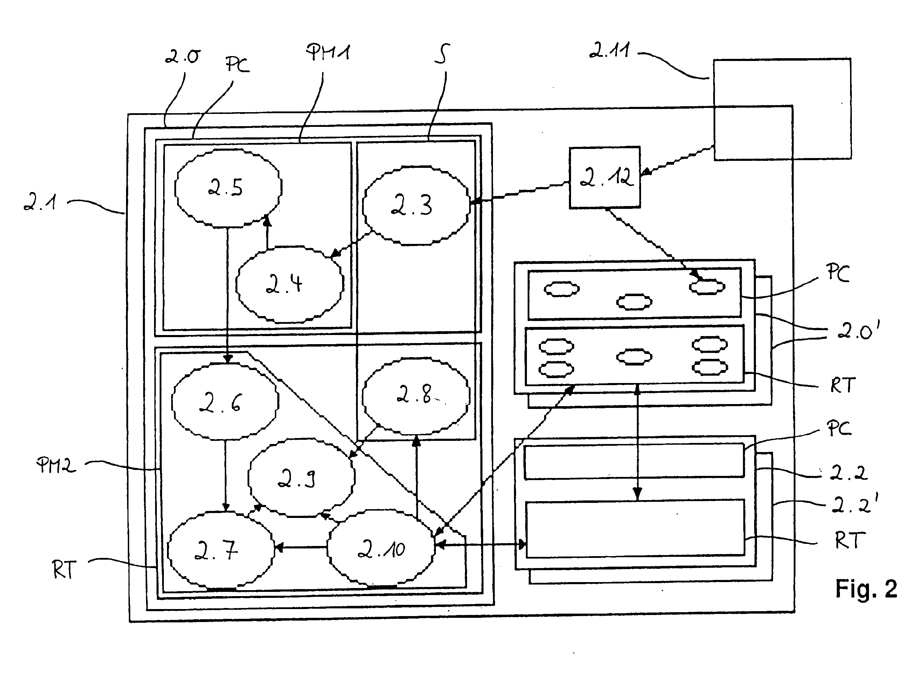

Das im vorstehenden unter Bezugnahme auf Fig. 1 beschriebene Verfahren zur Kollisionsvermeidung wird bei der Steuerungsvorrichtung gemäß Fig. 2 implementiert, die im folgenden als CAM (Collision Avoidance Manager) 2.0, 2.0' bezeichnet ist. Die CAM besitzen Kenntnisse bezüglich der anderen Bestandteile eines Arbeitsbereichs 2.1, die nachfolgend beschrieben sind.

Innerhalb des Arbeitsbereichs 2.1 gemäß Fig. 2 befinden sich mehrere Roboter oder zusammenwirkende Vorrichtungen, von denen nur die an sich bekannten Steuerungen (Leistungsversorgungs- und Bewegungssteuerungen) 2.2, 2.2' gezeigt sind. Die CAM 2.0, 2.0' beinhalten einen PC-Bereich PC und einen Echtzeit-Bereich RT, die durch Ausführen eines Standard-PC-Betriebssystems, wie Microsoft Windows™, und eines Echtzeit-Betriebssystems, wie VxWorks™, definiert sind, wozu entweder ein oder eine Mehrzahl von Prozessormittel/n PM1, PM2 in Form von Mikroprozessoren vorgesehen ist bzw. sind. In der gezeigten Ausgestaltung trifft dieser Sachverhalt auch auf die Robotersteuerungen 2.2, 2.2' zu.

Die PC-Bereiche PC der CAM 2.0, 2.0' weisen Prozessormittel PM1 und Speichereinheiten SM auf, die in beispielhafter Weise dargestellt und zum Ausführen und/oder Speichern zeitlich unabhängiger Geometriedateien 2.3, eines Arbeitsbereichs-Diagramms (WCD) 2.4 mit allen Informationen über Kollisionen im Arbeitsbereich 2.1 während einer programmierten Roboterbewegung M sowie zum Ausführen eines speziellen Programms 2.5 zum Kodifizieren einer Roboterbewegung M ausgebildet sind. Die Echtzeit-Bereiche RT der CAM 2.0, 2.0' weisen Prozessormittel PM2 und Speichereinheiten SM auf, die beispielhaft dargestellt und zum Ausführen und/oder Speichern eines Interpreters 2.6 zum Kommunizieren dynamischer Werkstück-/Werkzeugveränderungen 2.7 an der durch die CAM 2.0, 20' gesteuerten Vorrichtung an die RT ausgebildet sind. Die RT enthalten zusätzlich Geometriedaten 2.8, auf die eine Kollisionsvermeidungs-Aufgabe (Collision Avoidance Task CAT) 2.9 zugreift. Die CAT 2.9 erhält Eingangsdaten von einer Kommunikationsaufgabe 2.10, die den RT einer CAM 2.0 mit den RT unterschiedlicher CAM 2.0' und Robotersteuerungen 2.2, 2.2' verbindet. In der gezeigten Ausgestaltung teilen sich der PC und der RT der CAM 2.0 gemeinsame Speichereinheiten SM.

Die Geometriedatei 2.11, die den Arbeitsbereich 2.1 beschreibt, wird entweder im Arbeitsbereich 2.1 selbst oder außerhalb des Arbeitsbereichs 2.1 mittels CAD oder durch Offline-Simulation erzeugt. Eine Dateneingabe 2.12 der Geometriedatei 2.11 zu den PC der CAM 2.0, 2.0' geschieht über eine Netzverbindung oder ein Diskettenlaufwerk (in letzterem Fall mittels entnehmbarer Datenträger; nicht gezeigt).

Da die Robotersteuerung 2.2, 2.2' denselben Aufbau wie konventionelle Steuerungen besitzen, wird auf eine detaillierte Beschreibung verzichtet. Einzelheiten betreffend einer Robotersteuerung 2.2, 2.2' mit zwei Betriebssystemen findet sich in US 6,356,806 B1/DE 198 57 436 A1.

Sämtliche Informationen bezüglich Kollisionen, die sich aus der zur Verfügung gestellten Geometriedatei 2.3 ergeben, werden im WCD 2.4 gespeichert. In diesem Zusammenhang existieren zwei Arten von potentiellen Kollisionen: Bedingte potentielle Kollisionen (Conditional Potential Collisions CPC) und unbedingte potentielle Kollisionen (Un-Conditional Potential Collisions Ü-CPC). Eine CPC illustriert den Fall, wenn die potentielle Kollision nur unter bestimmten Umständen zwischen zwei Bestandteilen in einem Arbeitsbereich 2.1 gegeben ist. Beispielsweise könnte ein Werkstück X potentiell mit einem Werkzeug Y kollidieren, wenn Werkstück X durch einen bestimmten ersten Roboter unter Verwendung von Werkzeug Z gehandhabt und zugleich Werkzeug Y an einem bestimmten zweiten Roboter montiert ist. In allen anderen Fällen sind Werkstück X und Werkzeug Y so weit voneinander entfernt, dass kein Kollisionspotential existiert. Eine U-CPC beschreibt den Fall, wenn das Kollisionspotential zu allen Zeiten zwischen den Bestandteilen existiert. Beispielsweise kann eine U-CPC zwischen bestimmten Verbindungen zweier Roboter bestehen, wenn die Arbeitsvolumina, d.h. die von den beiden Robotern erreichbaren Raumbereiche sich zu allen Zeiten überlappen. Eine spezielle Eigenschaft der Geometriedatei im WCD 2.4 verweist auf die geometrische Approximation, die mit dem Gegenstand, z.B. dem Inhalt des Arbeitsbereichs 2.1, zu verwenden ist. Ein lokaler Teilsatz des WCD 2.4 wird in jeder CAM 2.0, 2.0' unterhalten und aktualisiert. Auf diese Weise kennt jede CAM 2.0, 2.0' alle potentiellen Verhältnisse im Arbeitsbereich 2.1. Bei einer Veränderung der Geometrie des Arbeitsbereichs 2.1, beispielsweise einer Werkzeugänderung, fügt ein spezieller Programmeditor (nicht gezeigt), der in Verbindung mit dem WCD 2.4 eingesetzt wird, eine entsprechende Anweisung in das Programm 2.5 ein, das den Interpreter 2.6 veranlasst, die dynamischen Werkzeug-/Werkstückinformationen 2.7 im RT zu aktualisieren, die den zeitlich veränderlichen Teil der Geometriedatei 2.3 beinhalten und auf die die CAT 2.9, die für die tatsächliche Vorhersage der Roboterbewegung und das im Gefährdungsfalle notwendige Abstoppen der Maschinen verantwortlich ist, in Echtzeit zugreifen kann.

Die dynamischen Werkzeug-/Werkstückinformationen 2.7 im RT der CAM 2.0, 2.0' umfassen Zeiger auf die Geometriedaten 2.8, die auch im RT enthalten und deshalb für die CAT 2.9 zur effizienten Kollisionsvermeidung in Echtzeit zugänglich sind. Die Ausführung der CAT 2.9 wird auch durch die Ausgabe der Kommunikationsaufgabe 2.10 beeinflusst, die eine Verbindung zwischen den RT weiterer CAM 2.0' und/oder Robotersteuerungen 2.2, 2.2' zur Verfügung stellt, sofern diese im Arbeitsbereich 2.1 vorhanden sind. Dies geschieht entweder durch direkte Kommunikation oder durch Veränderungen der Geometriedaten 2.8 und/oder der dynamischen Werkstück/Werkzeuginformationen 2.7 innerhalb des RT der CAM 2.0.

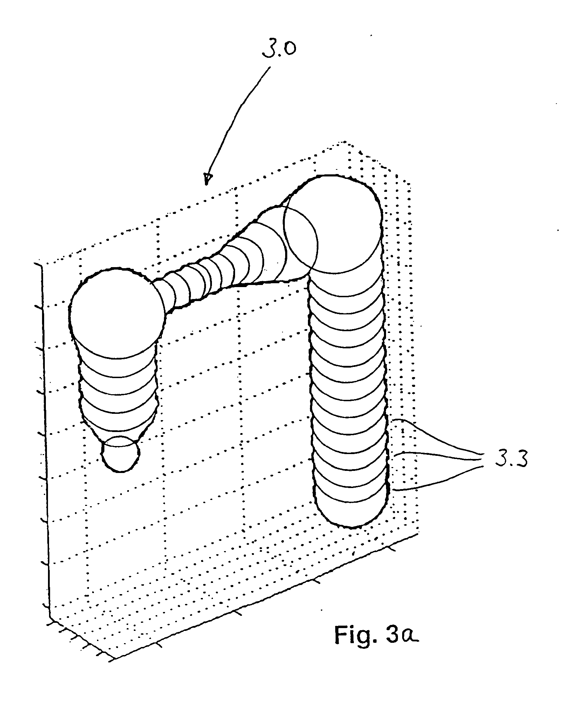

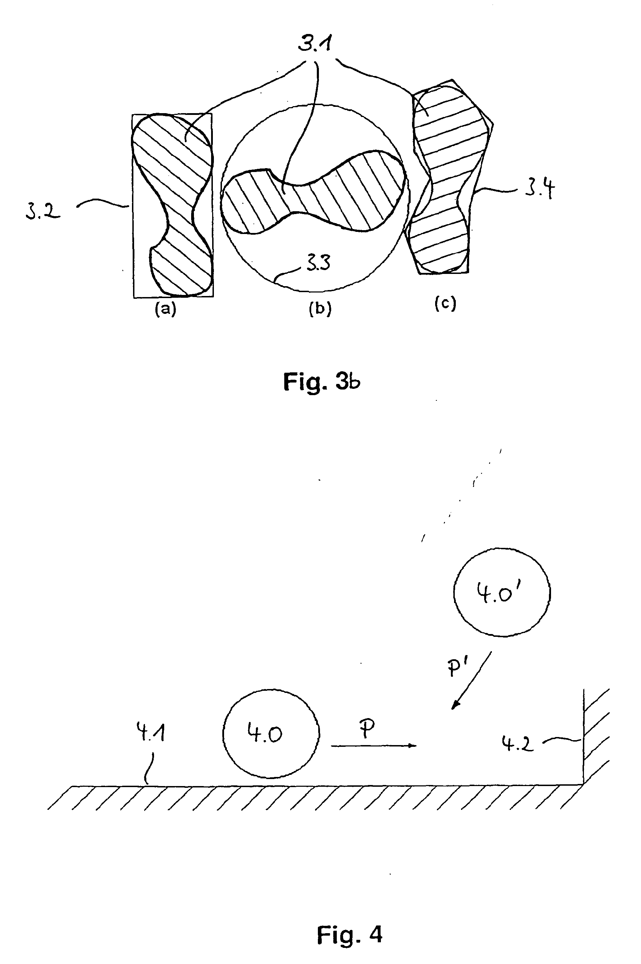

Fig. 3 zeigt verschieden Möglichkeiten der Approximierung von Teilen oder Verbindungen eines Roboters 3.0 (Fig. 3a) in vereinfachter schematischer Darstellung: Fig. 3b(a) zeigt eine hantelförmige Roboterverbindung 3.1 in einer Näherung als Quader oder Zylinder 3.2, Fig. 3b(b) zeigt eine Darstellung derselben Verbindung 3.1 als Kugel 3.3. Derartige näherungsweise Darstellungen 3.2, 3.3 sind recht konservativ, was eine Optimierung des verwendeten Raumbereiches angeht, ermöglichen jedoch eine schnelle Ausführbarkeit eines Kollisions-Detektionsalgorithmus' aufgrund ihrer geometrischen und mathematischen Einfachheit. Eine näherungsweise Darstellung von Verbindungen 3.1 mittels komplexerer Polyeder 3.4, d.h. vielseitiger geschlossener geometrischer Figuren führt zu einer größeren Genauigkeit, bedingt jedoch eine herabgesetzte Leistungsfähigkeit des Kollisions-Detektionsalgorithmus', was dessen Ausführgeschwindigkeit anbelangt (Fig. 3b(c)). Daher verwendet das erfindungsgemäße Verfahren vorzugsweise hierarchisch aufgebaute Approximationen mit verschiedenen Genauigkeitsstufen 3.2-3.4. Wenn die Näherungsformen 3.2 - 3.4 der Verbindungen 3.1 des Roboters 3.0 in einem Arbeitsbereich 2.1 weit voneinander entfernt sind, ist es nicht notwendig, dass die CAT 2.9 die genaueren Darstellungen 3.4 der Verbindungen 3.1 überprüft, was demgemäß nur für dichte Annäherungen geschieht.

Die geometrischen Approximationen 3.2 - 3.4 der Verbindungen 3.1 eines Roboters 3.0 sind in der Geometriedatei 2.3 und den Geometriedaten 2.8 in Speichereinheiten SM der CAM 2.0, 2.0' gespeichert, so dass die CAT 2.9 in Echtzeit auf sie zugreifen kann, um so den eigentlichen erfindungsgemäßen Kollisions-Vermeidungsalgorithmus auszuführen.

Behinderungsüberprüfung geschieht mittels bekannter Techniken, wie dem Verfahren von Gilbert, Johnson und Keerthi (GJK), welches ein iteratives Verfahren darstellt, bei dem die Geometrie in Simplexen unterteilt wird, bis sie zum minimalen Abstand zwischen den beiden Objekten hin konvergiert. Derartige Verfahren sind nicht Gegenstand der eigentlichen Erfindung und daher hier nicht weiter erläutert.

Fig. 4 zeigt schematisch ein Objekt 4.0, z.B. eine Verbindung eines Roboters, der parallel zu einer horizontalen Oberfläche 4.1 und zugleich in Richtung einer vertikalen Wand 4.2 bewegt ist. Ein Anhalten des Objektes 4.0 auf seiner Bahn P im Falle einer vorhergesagten Kollision mit einem anderen Objekt 4.0' vermiedet ein Zusammenstoßen der Objekte 4.0 und 4.0'. Wird das Objekt 4.0 jedoch abseits der Bahn P gestoppt, so wird zwar ein Zusammenstoss verhindert, jedoch kann in der Folge eine Kollision mit der horizontalen Oberfläche 4.1 resultieren. Darüber hinaus würde das Vorhersagen einer Kollision mit der Oberfläche 4.1 einen ungewollten Fehlalarm auslösen. Daher werden im Zuge des erfindungsgemäßen Verfahrens Roboterbewegungen vorzugsweise längs der Bahn vorhergesagt und gestoppt.

Um das erfindungsgemäße Verfahren zur Vermeidung von Kollisionen zu überprüfen, wurden numerische Simulationen der Bewegung von zwei identischen Robotern 3.0, wie in Fig. 3a dargestellt, in einem gemeinsamen Arbeitsbereich 2.1 durchgeführt. Jede Verbindung 3.1 des Roboters 3.0 wurde modellhaft als Abfolgen von Kugeln 3.3 nachgebildet. Die Bahnen P, P' jedes der Roboter 3.0 wurden als eine Abfolge von Gelenkwinkeln vorgegeben, die unter Verwendung einer Spline-Funktin dritten Grades interpoliert wurden. Die Anhaltzeit $t_s$ wurde zu 100 ms angenommmen.

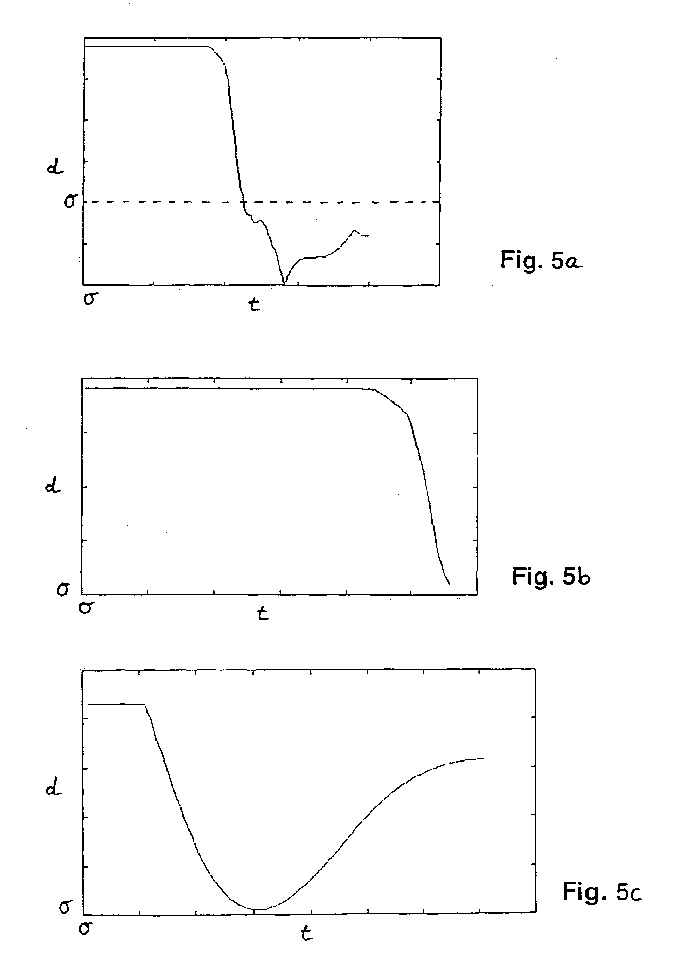

Die Ergebnisse sind in Fig. 5 dargestellt. In einem ersten Beispiel führen die Bahnen der beiden Roboter zu einer Kollision. Der Abstand d zwischen den Robotern als Funktion der Zeit t ist in Fig. 5a dargestellt. Fig. 5b zeigt den Abstand d zwischen den Robotern unter Verwendung der CAM. Die Relativbewegung der Roboter wird durch die CAM gestoppt, bevor es zu einer Kollision kommt (d > 0 für alle Werte von t). In einer anderen Simulation (Fig. 5c) bewegten sich die Roboter auf Bahnen, die ohne Kollision zu einer Annährung bis auf 0,5 mm führen. Ziel der Simulation ist eine Überprüfung, ob durch eine derartige Annäherung ein Fehlalarm ausgelöst wird. Fig. 5c zeigt, wie sich die Roboter einander annähern und anschließend wieder voneinander entfernen. Auch wenn die CAM eingeschaltet ist, wird keine Kollision längs der Bahn vorhergesagt, so dass die Maschinen - wie dies in der Praxis gewünscht ist - nicht anhalten müssen. Wenn die Roboter in einem konstanten gegenseitigen Abstand von 0,5 mm anstelle des vorstehend beschriebenen Annäherungs-und-Entfernungs-Szenarios gehalten werden (vergleiche Fig. 5c), ergibt sich dasselbe Simulationsergebnis, d.h. eine Kollision wurde nicht vorhergesagt, und keine der Maschinen wurde angehalten.

In der mit Blick auf Fig. 5 beschriebenen Simulation wurde die Anhaltzeit als konstant angenommen. Nach einer alternativen Ausgestaltung der Erfindung kann die Anhaltzeit mittels einer vorab gespeicherten Nachschlagtabelle aufgefunden werden. Allerdings schlägt die Erfindung mit Blick auf Echtzeit-Anwendungen vor, die Anhaltezeit der Roboterachsen unter Verwendung von neuronalen Netzen NN für jedes Gelenk des Roboters in Echtzeit abzuschätzen. Ein erfindungsgemäßes neuronales Netz zur Abschätzung der Anhaltezeit für eine Achse eines typischen Industrieroboters ist in Fig. 6 dargestellt.

Ein neuronales Netz NN ist eine Rechnerarchitektur, in der eine Mehrzahl von Elementarprozessoren (Knoten) 6.0 zum parallelen Verarbeiten von Informationen verbunden sind und auf diese Weise ein Netz bilden. Die Struktur neuronaler Netze ist von der Struktur des menschlichen Gehirns abgeleitet.

Neuronale Netze werden insbesondere für Aufgaben eingesetzt, die menschliches Verhalten imitieren, z.B. bei Verfahren zur Bilderkennung. Sie sind als solche bekannt und deshalb hier nicht detailliert beschrieben.

Die neuronalen Netze NN für die verschiedenen Achsen eines Industrieroboters weisen eine Mehrzahl von Schichten L2, L2, L3 aus Elementarprozessoren oder Knoten 6.0 auf, die von Schicht zu Schicht durch Signalpfade 6.1 verbunden sind. Die Schichten L1, L2, L3 heißen Eingabeschicht, Zwischenschicht bzw. Ausgabeschicht. Die Knoten 6.0 der Eingabeschicht L1 erhalten als Eingabedaten die Parameter, die die Anhaltzeit einer Achse beeinflussen, z.B. die Achsengeschwindigkeit $\dot{\theta}$ und die Nutzlast m. Diese Information breitet sich im Netz NN aus und erzeugt eine Abschätzung der Anhaltzeit $t_s$ der Achse in der Ausgabeschicht L3, die anschließend für die erfindungsgemäße Kollisionsdetektion benutzt wird.

**Bezugszeichenliste**

| | |
|---|---|
| 1.0 | Verfahren zur Kollisionsvermeidung |
| 1.1 | Initialisierungsphase |
| 1.2 | Abschätzung der Anhaltzeit |
| 1.3 | Konfigurationsvorhersage |
| 1.4 | Behinderungsüberprüfung |
| 1.5a | Anhalten des Roboters |
| 1.5b | Fortsetzung der Bewegung |
| 2.0, 2.0' | Steuerung zur Kollisionsvermeidung CAM |

| | |
|---|---|
| 2.1 | Arbeitsbereich |
| 2.2, 2.2' | Robotersteuerung |
| 2.3 | Geometriedatei |
| 2.4 | Arbeitsbereich-Beschreibungsdatei WCD |
| 2.5 | Programm |
| 2.6 | Interpreter |
| 2.7 | dynamische Werkzeug-/Werkstückveränderung |
| 2.8 | Geometriedaten |
| 2.9 | Kollisions-Vermeidungsaufgabe CAT |
| 2.10 | Kommunikationsaufgabe |
| 2.11 | Erzeugen der Geometriedatei |
| 2.12 | Dateneingabe |
| 3.0 | Roboter |
| 3.1 | Verbindung |
| 3.2 | Approximation (Quader, Zylinder) |
| 3.3 | Approximation (Kugel) |
| 3.4 | Approximation (Polyeder) |
| 4.0, 4.0' | Objekt |
| 4.1 | horizontale Oberfläche |
| 4.2 | vertikale Wand |
| 6.0 | Knoten/Elementarprozessor |
| 6.1 | Signalpfad |
| C, C' | Steuerzyklus |
| d | Abstand |
| L1 | Eingabeschicht |
| L2 | Zwischenschicht |
| L3 | Ausgabeschicht |
| M | Roboterbewegung |
| m | Nutzlast |
| NN | neuronales Netz |
| P, P' | Bahn |
| PC | Standard-PC-Bereich/-Betriebssystem |
| PM1, PM2 | Prozessormittel |
| RT | Echtzeit-Bereich-/Betriebssystem |
| S | Sensordaten |
| SM | Speichereinheit |
| t | Zeit |
| $t_s$ | Anhaltezeit |
| $\Delta t$ | Zeitintervall |
| $\gamma$ | Beschleunigung |
| $\theta$ | Winkel |
| $\dot{\theta}$ | Geschwindigkeit |

**Patentansprüche**

1. Verfahren zum Vermeiden von Kollisionen zwischen einem Roboter und wenigstens einem anderen Objekt, wobei eine Anhaltezeit für eine automatisch oder manuell gesteuerte Roboterbewegung bestimmt wird, **gekennzeichnet durch** die folgenden Schritte:

   - Bestimmen der Anhaltezeit auf der Grundlage gegenwärtiger und früherer Gelenkstellungen und Gelenkgeschwindigkeiten für jedes Gelenk eines solchen aufweisenden Roboters;
   - Vorhersagen einer Konfiguration einer Bewegungsbahn des Roboters bei der Anhaltezeit;
   - Überprüfen der vorhergesagten Konfiguration der Bewegungsbahn mittels Abstands-/Behinderungsalgorithmen hinsichtlich Behinderungen von Teilen des Roboters **durch** Teile der anderen Objekte oder umgekehrt; und
   - Anhalten des Roboters und/oder der anderen Objekte im Falle einer drohenden Kollision auf der vorhergesagten Bewegungsbahn.

2. Verfahren nach Anspruch 1, **dadurch gekennzeichnet, dass** der Roboter entlang seiner Bewegungsbahn abgebremst wird.

3. Verfahren nach Anspruch 1, **dadurch gekennzeichnet, dass** der Roboter ohne Beachtung seiner eigentlichen Bewegungsbahn abgebremst wird.

4. Verfahren nach einem der Ansprüche 1 bis 3, **dadurch gekennzeichnet, dass** die Behinderungsüberprüfung ein Bestimmen von Abständen zwischen geometrischen Approximationen von Teilen des Roboters und der anderen Objekte umfasst.

5. Verfahren nach Anspruch 4, **dadurch gekennzeichnet, dass** die geometrischen Approximationen verschiedene Genauigkeitsstufen aufweisen, die nach Maßgabe einer gewünschten Genauigkeit der Abstandsüberprüfung geprüft werden.

6. Verfahren nach einem der vorangehenden Ansprüche, **dadurch gekennzeichnet, dass** die Vorhersage der Bewegungsbahn eines Gelenks mittels einer Beziehung

$$\theta_i = 1/2\,\gamma_i t_{i,s}^{\;2} + \dot{\theta}_{i,0} t_{i,s} + \theta_{i,0}$$

erfolgt, wobei $\theta_i$ eine vorhergesagte Stellung des Gelenkes i, $\theta_{i,0}$ und $\theta_{i,0}$ eine Stellung bzw. eine Geschwindigkeit des Gelenkes i zu einer gegenwärtigen Zeit t, $t_{i,s}$ die Anhaltzeit des Gelenkes i und $\gamma_i$ eine geschätzte gegenwärtige Gelenkbeschleunigung bezeichnet.

7. Verfahren nach Anspruch 6, **dadurch gekennzeichnet, dass** eine Geschwindigkeit des Gelenks i unter Berücksichtigung der Gelenkstellung zu einer gegenwärtigen Zeit und zu früheren Zeiten mittels einer Beziehung

$$\dot{\theta}_i = c_f \cdot \sum_{k=0}^{4} c_k \cdot \theta_{i,-k}$$

bestimmt wird, wobei $\theta_{i,-k} = \theta_i(t_k)$, $t_{-k} = t - k \cdot \Delta t$ und $c_f = 1/(12\Delta t)$, $c_0 = 25, c_1 = -48, c_2 = 36, c_3 = -16, c_4 = 3$.

8. Verfahren nach Anspruch 7, **dadurch gekennzeichnet, dass** die Beschleunigung des Gelenkes i unter Berücksichtigung der Gelenkgeschwindigkeit zu einer gegenwärtigen Zeit und zu früheren Zeiten mittels der Beziehung

$$\gamma_i = c_f \cdot \sum_{k=0}^{4} c_k \cdot \dot{\theta}_{i,-k}$$

abgeschätzt wird.

9. Verfahren nach Anspruch 8, **dadurch gekennzeichnet, dass** die Konfigurationsvorhersage und die Behinderungsüberprüfung beinhalten:

Bestimmen eines Anhalteabstands $0_{i,stop}$ des Gelenkes i aus

$$\theta_{i,stop} = \dot{\theta}_{i,0}^{\;2} / (2\gamma_{i,max}),$$

wobei $\gamma_{i,max}$ eine maximale negative Beschleunigung des Gelenkes bezeichnet;
Addieren des Anhalteabstands zu der gegenwärtigen Stellung des Gelenkes, um so eine Konfiguration nach der Anhaltezeit zu erhalten; und
Bestimmen eines Abstands zwischen Teilen des Roboters und der anderen Objekte bei dieser Konfiguration.

10. Verfahren nach einem der vorangehenden Ansprüche, **dadurch gekennzeichnet, dass** ein Filter auf die Gelenkstellungs- und die Geschwindigkeitsdaten angewendet wird, die zur Stellungsvorhersage benutzt werden.

11. Verfahren nach Anspruch 10, **dadurch gekennzeichnet, dass** der Filter im Zeitbereich angewendet wird.

12. Verfahren nach Anspruch 11, **dadurch gekennzeichnet, dass** zum Filtern ein laufender Mittelwert gebildet wird.

13. Verfahren nach einem der vorangehenden Ansprüche, **dadurch gekennzeichnet, dass** die Konfigurationsvorhersage und die Behinderungsüberprüfung mittels wenigstens eines neuronalen Netzes geschieht, das zum Abschätzen von Anhaltzeiten der Roboterachsen verwendet wird.

14. Verfahren nach Anspruch 13, **dadurch gekennzeichnet, dass** für jedes Robotergelenk zumindest ein neuronales Netz verwendet wird.

15. Verfahren nach Anspruch 14, **dadurch gekennzeichnet, dass** Eingaben an die neuronalen Netze Gelenkgeschwindigkeiten, Gelenkwinkel, Gelenkstellungen, Stellungen und Geschwindigkeiten der Roboterbasis sowie Werkzeug- oder Lastmassen umfassen.

16. Verfahren nach einem der vorangehenden Ansprüche, **dadurch gekennzeichnet, dass** alle gewonnenen Informationen über Kollisionen in einer Arbeitsbereich-Beschreibungsdatei zur Weiterleitung an ein Echtzeit-Betriebssystem gespeichert werden, dass für die Steuerung der Roboterbewegung verantwortlich ist.

17. Verfahren nach Anspruch 16, **dadurch gekennzeichnet, dass** die Arbeitsbereich-Beschreibungsdatei Zeiger auf geometrische Approximationsdateien enthält, die zum Beschreiben aller im Arbeitsbereich vorhandenen Objekte benötigt werden.

18. Verfahren nach Anspruch 17, **dadurch gekennzeichnet, dass** eine Kopie der Arbeitsbereich-Beschreibungsdatei in jeder Steuerungseinheit im Arbeitsbereich, d.h. in jeder zusammenwirkenden Vorrichtung unterhalten und aktualisiert wird.

19. Verfahren nach Anspruch 18, **dadurch gekennzeichnet, dass** die Arbeitsbereich-Beschreibungsdatei zumindest bei einer geometrischen Veränderung im Arbeitsbereich, z.B. beim Befestigen eines neuen Werkzeugs an dem Roboter, aktualisiert wird.

20. Verfahren nach Anspruch 19, **dadurch gekennzeichnet, dass** die Arbeitsbereich-Beschreibungsdatei zusammen mit einer Beschreibung der geometrischen Veränderung im Echtzeit-Betriebssystem aktualisiert wird.

21. Verfahren nach einem der vorangehenden Ansprüche, **dadurch gekennzeichnet, dass** vor einer erlaubten Berührung zwischen dem Roboter und einem Objekt, beispielsweise während eines Handhabungsvorgangs, eine steuerungsrelevante Verbindung geschaffen wird, aufgrund derer der Roboter und ggf. das Objekt während einer nachfolgenden Kollision nicht angehalten werden.

22. Verfahren nach Anspruch 21, **dadurch gekennzeichnet, dass** die Verbindung nach dem erlaubten Berührungsvorgang wieder gelöst wird.

23. Steuerungsvorrichtung zum Vermeiden von Kollisionen zwischen einem Roboter und wenigstens einem anderen Objekt, Mitteln zum regelmäßigen Bestimmen einer Anhaltzeit für eine automatisch oder manuell gesteuerte Roboterbewebung, **gekennzeichnet durch**

- die Ausbildung der Mittel zum Bestimmen der Anhaltezeit zum Bestimmen Letzterer auf der Grundlage gegenwärtiger und frührer Gelenkstellungen und Gelenkgeschwindigkeiten für jedes Robotergelenk;
- Mittel zum regelmäßigen Vorhersagen einer Konfiguration einer Bewegungsbahn des Roboters nach den Anhaltzeiten;
- Mittel zum regelmäßigen Überprüfen der vorhergesagten Konfiguration mittels Abstands-/Behinderungs-Algorithmen bezüglich einer Behinderung von Teilen des Roboters **durch** Teile der anderen Objekte; und

- Mittel zum Anhalten des Roboters und/oder der anderen Objekte im Falle einer drohenden Kollision auf der vorhergesagten Bewegungsbahn.

24. Steuerungsvorrichtung nach Anspruch 23, **gekennzeichnet durch** Prozessormittel zum Ausführen zweier paralleler Betriebssysteme, bei denen es sich um ein Standard-PC-Betriebssystem und ein Echtzeit-Betriebssystem zum Steuern einer Roboterbewegung handelt.

25. Steuerungsvorrichtung nach Anspruch 24, **dadurch gekennzeichnet, dass** Prozessormittel zumindest in Verbindung mit einem Echtzeit-Betriebssystem zum Kommunizieren mit Echtzeit-Betriebssystemen entsprechender anderer Steuerungseinrichtungen in einem gemeinsamen Arbeitsbereich ausgebildet sind.

26. Steuerungsvorrichtung nach Anspruch 25, **gekennzeichnet durch** eine Eingabeeinrichtung zum Eingeben von Geometriedaten für den Arbeitsbereich.

27. Steuerungsvorrichtung nach Anspruch 26, **dadurch gekennzeichnet, dass** die Eingabeeinrichtung als Diskettenlaufwerk oder Netz-Verbindungseinrichtung ausgebildet ist.

28. Steuerungsvorrichtung nach einem der Ansprüche 24 bis 27, **dadurch gekennzeichnet, dass** die Prozessormittel zum Ausführen eines Übersetzungsprogramms zum Kommunizieren zwischen PC- und Echtzeitbetriebssystem ausgebildet sind.

29. Steuerungsvorrichtung nach einem der Ansprüche 24 bis 28, **dadurch gekennzeichnet, dass** die Prozessormittel zum Ausführen entsprechender Teile eines Programms ausgebildet sind, durch das ein Verfahren zum Vermeiden von Kollisionen implementiert ist, insbesondere ein Verfahren nach den vorangehenden Ansprüchen 1 bis 22.

30. Steuerungsvorrichtung nach einem der Ansprüche 24 bis 29, **gekennzeichnet durch** Speichereinrichtungen in Verbindung mit beiden Betriebssystemen zum Speichern von Geometriedaten für den Arbeitsbereich.

**Claims**

1. A method of avoiding collisions between a robot and at least one other object, a stopping time being determined for an automatically or manually controlled robot movement, **characterised by** the following steps:

   - determining the stopping time on the basis of current and past joint positions and velocities of each joint of a robot comprising such joints;
   - predicting a configuration of a trajectory of the robot at said stopping time;
   - checking the predicted configuration of the trajectory through distance/interference algorithms concerning interference of robot components with components of said other objects or vice versa; and
   - stopping the robot and/or said other objects in the event of an imminent collision on the predicted trajectory.

2. A method according to claim 1, wherein the robot is stopped on its path.

3. A method according to claim 1, wherein the robot is stopped off its path.

4. A method according to one of claims 1 to 3, wherein interference checking involves determining distances between geometric approximations of components of the robot and said other objects.

5. A method according to claim 4, wherein said geometric approximations have different levels of accuracy which are checked according to a desired accuracy in distance checking.

6. A method according to one of the preceding claims, wherein forecasting the trajectory of a joint involves application of a relationship:

$$\theta_i = 1/2\, \gamma_i t_{i,s}^2 \;+\; \dot{\theta}_{i,0} t_{i,s} \;+\; \theta_{i,0}\,,$$

where $\theta_i$ is a predicted position of joint i, where $\theta_{i,0}$ and $\theta_{i,0}$ are a position and a velocity of joint i at a current time t, respectively, where $t_{i,s}$ is the stopping time of joint i, and where $\gamma_i$ is an estimated current joint acceleration.

7.  A method according to claim 6, wherein a velocity of joint i is estimated from the joint position at a current time and at earlier times using:

$$\dot{\theta}_i = c_f \cdot \sum_{k=0}^{4} c_k \cdot \theta_{i,-k} \ ,$$

where $\theta_{i,k} = \theta_i(t_k), t_{-k} = t - k \cdot \Delta t$, and
$c_f = 1 \ 1/(12\Delta t), c_0 = 25, c_1 = -48, c_2 = 36, c_3 = -16, c_4 = 3$ .

8.  A method according to claim 7, wherein the acceleration of joint i is estimated from the joint velocity at a current time and at earlier times, using:

$$\gamma_i = c_f \cdot \sum_{k=0}^{4} c_k \cdot \dot{\theta}_{i,-k} \ .$$

9.  A method according to claim 8, wherein configuration forecasting and interference checking involves: determining a stopping distance of joint i from

$$\theta_{i,stop} = \dot{\theta}_{i,0}^{2} / (2\gamma_{i,max}) \ ,$$

where $\gamma_{i,max}$ is a maximum negative acceleration of the joint;
adding the stopping distance to the actual position of the joint to obtain a configuration over the stopping time; and determining a distance between robot components and said other objects at said configuration.

10. A method according to one of the preceding claims, wherein a filter is applied to the joint position and velocity data used for position prediction.

11. A method according to claim 10, wherein said filter is applied in the time domain.

12. A method according to claim 11, wherein said filter is a running average.

13. A method according to one of the preceding claims, wherein configuration forecasting and interference checking involves using at least one neural network to estimate stopping times of the robot axes.

14. A method according to claim 13, wherein one neural network is used for each robot joint.

15. A method according to claim 14, wherein input to said neural networks includes one or more element(s) from a group comprising joint velocities, joint angles, joint positions, robot base positions, robot base velocities and tool or load masses.

16. A method according to one of the preceding claims, wherein all acquired information concerning collisions is stored in a workcell description file for communication to a real-time operating system responsible for controlling the robot movement.

17. A method according to claim 16, wherein the workcell description file contains pointers to geometric approximation files needed to describe all objects present in the workcell.

18. A method according to claim 17, wherein a copy of the workcell description file is maintained and updated on each controller, i.e. on each cooperative mechanism present in the workcell.

19. A method according to claim 18, wherein the workcell description file is updated at least when a geometric change happens in the workcell, e.g. mounting of a new tool to the robot.

20. A method according to claim 19, wherein the workcell description file including a description of the geometric change is updated in the real-time operating system.

21. A method according to one of the preceding claims, wherein prior to an allowed contact between the robot and an object, e.g. during a handling operation a link is established causing the robot and, where applicable, the object not to stop during a subsequent collision.

22. A method according to claim 21, wherein the link is broken after the allowed contact operation is terminated.

23. A control device for avoiding collisions between a robot and at least one other object, means for regularly determining a stopping time of an automatically or manually controlled robot movement, **characterised by** :

> - Configuring the means for determining the stopping time so as to determine the latter on the basis of current and past point positions and velocities for each robot joint;
> - means for regularly predicting a configuration of a trajectory of the robot after said stopping times;
> - means for regularly checking the predicted configuration through distance/interference algorithms regarding interference of robot .components with components of said other objects; and
> - means for stopping the robot and/or said other objects in the event of an imminent collision on the predicted trajectory.

24. A control device according to claim 23, comprising processor means for running two operating systems in parallel, one of which being a standard PC operating system, the other one being a real-time operating system for controlling a robot motion.

25. A control device according to claim 24, wherein said processor means at least in connection with the real-time operating system are designed for communication with real-time operating systems of other corresponding control devices present in the same workcell.

26. A control device according to claim 25, further comprising an input device for inputting workcell related geometric data.

27. A control device according to claim 26, wherein the input device is a disk drive or a network connection device.

28. A control device according to one of claims 24 to 27, wherein said processor means are devised for running an interpretation program for communication between the PC and the real-time operating systems.

29. A control device according to one of claims 24 to 28, wherein said processor means are devised for running respective parts of a program implementing a collision avoidance method, in particular a method as described in preceding claims 1 to 22.

30. A control device device according to one of claims 24 to 29, comprising memory units in conjunction with both operating systems for storing workcell related geometry data.

**Revendications**

1. Méthode pour éviter les collisions entre un robot et au moins un autre objet, un temps d'arrêt étant défini pour un mouvement du robot commandé automatiquement ou manuellement, **caractérisée par** les phases énumérées ci-après .

> - Calcul du temps d'arrêt sur la base des positions et vitesses actuelles et précédentes de chacune des articulations dont est muni le robot ;
> - Prévision d'une configuration d'une trajectoire du robot lors du temps d'arrêt ;
> - Contrôle de la configuration prévue de la trajectoire à l'aide d'algorithmes de distance ou d'interférence par rapport à l'interférence de certaines parties du robot par des parties des autres objets ou vice-versa ; et
- Arrêt du robot et/ou des autres objets en cas d'imminence de collision sur la trajectoire prévue.

**2.** Méthode selon la revendication 1, **caractérisée en ce que** le robot est freiné tout au long de sa trajectoire.

**3.** Méthode selon la revendication 1, **caractérisée en ce que** le robot est freiné sans tenir compte de sa trajectoire réelle.

**4.** Méthode selon une des revendications 1 à . 3, **caractérisée en ce que** le contrôle de l'interférence comprend le calcul des distances entre les approximations géométriques des parties du robot et des autres objets.

**5.** Méthode selon la revendication 4, **caractérisée en ce que** les approximations géométriques présentent différents degrés de précision qui sont contrôlés suivant une précision voulue du contrôle de distance.

**6.** Méthode selon une des revendications qui précèdent, **caractérisée en ce que** la trajectoire d'une articulation est prédite à l'aide de la relation

$$\theta_i = 1/2\, \gamma_i t_{i,s}^2 + \dot{\theta}_{i,0} t_i$$

où $\theta_i$ désigne une position prédite de l'articulation i, $\theta_{i,0}$ et $\theta_{i,0}$ désignent une position ou une vitesse de l'articulation i à un instant présent t, $t_{i,s}$. désigne le temps d'arrêt de l'articulation i et $\gamma_i$ désigne une accélération estimée actuelle de l'articulation.

**7.** Méthode selon la revendication 6, **caractérisée en ce qu'**une vitesse de l'articulation i est calculée en tenant compte de la position de l'articulation à un instant présent et à des instants précédents à l'aide de la relation

$$\dot{\theta}_i = c_f \cdot \sum_{k=0}^{4} c_k$$

où $\theta_{i, -k} = \theta_i (t_{-k})$, $t_{-k} = t - k \cdot \Delta t$ et $c_f = 1/(12\Delta t)$ , $c_0 = 25$, $c_1 = -48$, $c_2 = 36$, $c_3 = -16$, $c_4 = 3$.

**8.** Méthode selon la revendication 7, **caractérisée en ce que** l'accélération de l'articulation i est estimée en tenant compte de la vitesse de l'articulation à un instant présent et à des instants précédents à l'aide de la relation

$$\gamma_i = c_f \cdot \sum_{k=0}^{4} c_k$$

**9.** Méthode selon la revendication 8, **caractérisée en ce que** la configuration prévue et le contrôle de l'interférence comprennent :

le calcul d'une distance d'arrêt $\theta_{i.stop}$ de l'articulation i à partir de

$$\theta_{i,stop} = \dot{\theta}_{i,0}^2 / (2\gamma_i$$

où $\gamma_{i, max}$ désigne une accélération maximale négative de l'articulation;
l'addition de la distance d'arrêt à la position actuelle de l'articulation, afin d'obtenir une configuration après l'instant d'arrêt ; et le calcul d'une distance entre des parties du robot et des autres objets dans ladite configuration.

10. Méthode selon une des revendications qui précèdent, **caractérisée en ce qu'**un filtre est appliqué aux données de position et de vitesse de l'articulation qui sont utilisées pour prédire la position.

11. Méthode selon la revendication. 10, **caractérisée en ce que** le filtre est appliqué dans la plage des temps.

12. Méthode selon la revendication 11, **caractérisée en ce qu'**une valeur moyenne courante est formée pour filtrer.

13. Méthode selon une des revendications qui précèdent, **caractérisée en ce que** la prévision de configuration et le contrôle de la gêne se font à l'aide d'au moins un réseau neuronal qui est employé pour évaluer les temps d'arrêt des axes du robot.

14. Méthode selon la revendication 13, **caractérisée en ce que** pour chaque articulation du robot au moins un réseau neuronal est employé.

15. Méthode selon la revendication 14, **caractérisée en ce que** l'introduction des données aux réseaux neuronaux comprend les vitesses des articulations, les angles des articulations, les positions des articulations, les positions et les vitesses de la base du robot ainsi que les masses des outils ou des charges.

16. Méthode selon une des revendications qui précèdent, **caractérisée en ce que** toutes les informations acquises sur les collisions sont enregistrées dans un fichier descriptif de la zone de travail, fichier retransmis à un système d'exploitation en temps réel, lequel est responsable de la commande des mouvements du robot.

17. Méthode selon la revendication 16, **caractérisée en ce que** le fichier descriptif de la zone de travail contient des pointeurs vers les fichiers d'approximation géométrique qui sont nécessaires pour décrire tous les objets présents dans la zone de travail.

18. Méthode selon la revendication 17, **caractérisée en ce qu'**une copie du fichier descriptif de la zone de travail est entretenue et actualisée dans chaque unité de commande dans la zone de travail, c'est-à-dire dans chaque dispositif concourant.

19. Méthode selon la revendication 18, **caractérisée en ce que** le fichier descriptif de la zone de travail est actualisé au moins lors d'une modification géométrique dans la zone de travail, par exemple quand un nouvel outil est fixé au robot.

20. Méthode selon la revendication 19, **caractérisée en ce que** le fichier descriptif de la zone de travail est actualisé avec une description de la modification géométrique dans le système d'exploitation en temps réel.

21. Méthode selon une des revendications qui précèdent, **caractérisée en ce qu'**avant un contact autorisé entre le robot et un objet, par exemple pendant une procédure de manipulation, une liaison relevant de la commande est établie grâce à laquelle le robot et, le cas échéant, l'objet ne sont pas arrêtés pendant une collision subséquente.

22. Méthode selon la revendication 21, **caractérisée en ce que** la liaison est supprimée après le processus autorisé de contact.

23. Dispositif de commande pour éviter des collisions entre un robot et au moins un autre objet, moyens pour calculer régulièrement un temps d'arrêt pour un mouvement de robot commandé automatiquement ou manuellement, **caractérisé par**

   - La formation des moyens pour calculer le temps d'arrêt pour définir ce dernier sur la base des positions et vitesses actuelles et précédentes de chacune des articulations du robot ;
   - Des moyens pour prédire régulièrement une configuration d'une trajectoire du robot après les temps d'arrêt ;
   - Des moyens pour contrôler régulièrement la configuration prédite à l'aide d'algorithmes de distance ou d'interférence relatifs à l'interférence de parties du robot par des parties des autres objets ; et
   - Des moyens pour arrêter le robot et/ou les autres objets en cas de collision imminente sur la trajectoire prédite.

24. Dispositif de commande selon la revendication 23, **caractérisé par** des processeurs pour exécuter deux systèmes d'exploitation parallèles consistant en un système d'exploitation PC standard et en un système d'exploitation en temps réel pour commander un mouvement d'un robot.

25. Dispositif de commande selon la revendication 24, **caractérisé en ce que** les processeurs sont formés, au moins en liaison avec un système d'exploitation en temps réel, pour communiquer avec des systèmes d'exploitation en temps réel d'autres dispositifs de commande correspondants dans une zone de travail commune.

26. Dispositif de commande selon la revendication 25, **caractérisé par** un dispositif de saisie pour introduire des données géométriques pour la zone de travail.

27. Dispositif de commande selon la revendication 26, **caractérisé en ce que** le dispositif de saisie est formé d'un lecteur de disquettes ou d'un dispositif de liaison au réseau.

28. Dispositif de commande selon une des revendications 24 à 27, **caractérisé en ce que** les processeurs sont formés pour exécuter un programme d'interprétation afin de communiquer entre les systèmes d'exploitation PC et en temps réel.

29. Dispositif de commande selon une des revendications 24 à 28, **caractérisé en ce que** les processeurs sont formés pour exécuter les parties concernées d'un programme grâce auquel un procédé permettant d'éviter des collisions est implémenté, singulièrement un procédé selon une des revendications 1 à 22 qui précèdent.

30. Dispositif de commande selon une des revendications 24 à 29, **caractérisé par** des dispositifs de mémoire en liaison avec les deux systèmes d'exploitation pour mémoriser les données géométriques pour la zone de travail.

**Fig. 1**

Fig. 2

Fig. 3a

3.1

3.2

3.3

3.4

(a)          (b)          (c)

**Fig. 3b**

4.0'

P'

4.1          4.0          P          4.2

**Fig. 4**

Fig. 5a

Fig. 5b

Fig. 5c

**Fig. 6**

**EP 1 366 867 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 7314378 A
- US 6212444 B
- US 6356806 B1
- DE 19857436 A1